# DEMANDE DE BREVET EUROPEEN

(11) **EP 1 111 254 A1**
(43) Date de publication de la demande: **27.06.2001**
(21) Numéro de dépôt: 00403482.3
(22) Date de dépôt: 12.12.2000
(51) Int. Cl.: F16B 17/00, F16B 21/09

(54) **Structure d'assemblage et de positionnement du type boulon/ouverture en trou de serrure**

(30) Priorité: 23.12.1999 FR 9916351
(71) Demandeur: SAGEM SA, 75116 Paris (FR)
(72) Inventeur: Forja, Christian, 91320 Wissous (FR); Roger, Christian, 75005 Paris (FR); Nys, Gérard, 93220 Gagny (FR)
(74) Mandataire: Fruchard, Guy

(57) **Abrégé**

Structure d'assemblage et de positionnement du type boulon/ouverture en trou de serrure de deux éléments (1, 5) dont l'un comporte une série de boulons (7) s'étendant en saillie et l'autre comporte une série correspondante d'ouvertures en trou de serrure (11) ayant une première partie (12) de dimension suffisante pour permettre le passage d'une tête des boulons (7) et une seconde partie (13) oblongue de largeur inférieure à la tête des boulons (7) et adaptée à recevoir la tige (8) des boulons (7), l'un (5) des éléments comportant en outre au moins un ergot de positionnement (14) tandis que l'autre élément (1) comporte un trou de positionnement (15) correspondant qui est oblong et est disposé de façon à permettre un engagement de l'ergot de positionnement (14) lorsque la tête (9) des boulons (7) est engagée dans la première partie correspondante (12) des ouvertures en trou de serrure (11), et la partie oblongue (13) des ouvertures en trou de serrure (11) a une longueur suffisante pour que lors d'un coulissement des tiges de boulon (8) dans les ouvertures en trou de serrure et de l'ergot de positionnement (14) dans le trou de positionnement (15), l'ergot de positionnement (14) vienne en butée sur une extrémité du trou de positionnement (15) alors que la tige (8) des boulons (7) est encore en retrait ou au plus en contact avec l'extrémité correspondante de la seconde partie (13) de l'ouverture en trou de serrure (15) dans laquelle elle s'étend.

## Description

La présente invention concerne une structure d'assemblage et de positionnement du type boulon/ouverture en trou de serrure, et plus particulièrement bien que non exclusivement pour l'assemblage d'un boîtier d'antenne avec un boîtier électronique d'un relais hertzien.

On connaît des relais hertziens comprenant une antenne disposée dans un boîtier d'antenne et associée à un circuit électronique disposé dans un boîtier électronique. La communication entre l'antenne et le circuit électronique est réalisée sous forme d'une onde hyperfréquence qui passe dans un guide d'onde s'étendant entre l'antenne et le circuit électronique. Le boîtier d'antenne est associé au boîtier électronique par des boulons qui traversent une collerette solidaire du boîtier d'antenne et sont vissés dans la partie en regard du boîtier électronique, généralement dans des plots de refroidissement de celui-ci. La longueur du guide d'ondes étant très faible, il n'est pas possible d'accéder aux têtes des boulons selon une direction axiale de ceux-ci et la structure d'assemblage du boîtier d'antenne avec le boîtier électronique est généralement du type boulon/ouverture en trou de serrure, c'est-à-dire que la collerette du boîtier d'antenne comporte des ouvertures en trou de serrure ayant une première partie de dimensions suffisantes pour permettre le passage d'une tête de boulon et une seconde partie oblongue de largeur inférieure à la tête des boulons et adaptée à recevoir la tige des boulons, tandis que des boulons sont vissés dans la paroi en regard du boîtier électronique. Lors de l'assemblage, les têtes des boulons sont engagées dans la première partie des ouvertures en trou de serrure puis le boîtier d'antenne et le boîtier électronique sont déplacés l'un par rapport à l'autre pour que les tiges des boulons s'engagent dans la seconde partie des ouvertures en trou de serrure. Un serrage des boulons est ensuite effectué en engageant une clé latéralement afin de réaliser un verrouillage du boîtier d'antenne par rapport au boîtier électronique.

Par ailleurs, on sait que le guide d'onde est généralement de section rectangulaire et il est donc indispensable que le boîtier d'antenne et le boîtier électronique soient montés dans une position précise l'un par rapport à l'autre afin que la partie du guide d'onde associée au boîtier électronique coïncide exactement avec la partie du guide d'onde associée au boîtier d'antenne. A cet effet le boîtier d'antenne porte des ergots de positionnement et le boîtier électronique comporte des trous de positionnement correspondants.

Dans les structures d'assemblage et de positionnement existantes, le trou de positionnement est un trou circulaire de même diamètre que l'ergot de positionnement. Pour pouvoir engager l'ergot de positionnement dans le trou de positionnement il est donc nécessaire que celui-ci soit exactement en face du trou de positionnement. A ce propos, lorsque la tête des boulons est engagée dans la première partie des ouvertures en trou de serrure, l'ergot de positionnement ne se trouve pas en regard du trou de positionnement correspondant. Afin de permettre un engagement de la tête de boulon dans la première partie de l'ouverture en trou de serrure et un coulissement de la tige des boulons dans la seconde partie des ouvertures en trou de serrure, il est donc nécessaire lors du vissage initial du boulon de laisser entre la tête du boulon et la surface du boîtier électronique portant les boulons un espace légèrement supérieur à la somme de la hauteur des ergots de positionnement et de l'épaisseur de la collerette du boîtier d'antenne. Après engagement de la tête des boulons à travers la première partie des ouvertures en trou de serrure, la tige des boulons peut ainsi coulisser dans la seconde partie des ouvertures en trou de serrure jusqu'à ce que les ergots de positionnement soient en regard des trous de positionnement. Les ergots de positionnement sont alors engagés dans les trous de positionnement et le serrage des boulons est effectué. En raison de l'espace initial nécessaire entre la tête des boulons et la surface qui les porte, le vissage final des boulons est effectué sur une longueur légèrement supérieure à la hauteur des ergots de positionnement. Ce serrage étant effectué manuellement, il nécessite un temps de main d'oeuvre important d'autant plus qu'il est nécessaire d'effectuer successivement le serrage de chacun des boulons. Plusieurs dizaines de milliers d'heures de main d'oeuvre sont ainsi perdues chaque année pour le serrage des boulons.

Selon l'invention on propose une structure d'assemblage du type précité dans laquelle d'une part le trou de positionnement est oblong et est disposé de façon à permettre un engagement de l'ergot de positionnement lorsque la tête des boulons est engagée dans la première partie correspondante des ouvertures en trou de serrure, et d'autre part la partie oblongue des ouvertures en trou de serrure a une longueur suffisante pour que lors d'un coulissement des tiges de boulons dans les ouvertures en trou de serrure et de l'ergot de positionnement dans le trou de positionnement, l'ergot de positionnement vienne en butée sur une extrémité du trou de positionnement alors que la tige des boulons est encore en retrait ou au plus en contact avec l'extrémité correspondante de la seconde partie de l'ouverture en trou de serrure dans laquelle elle s'étend.

Ainsi, lors du montage, l'ergot de positionnement est engagé dans le trou de positionnement simultanément à l'engagement de la tête des boulons dans la première partie des ouvertures en trou de serrure, de sorte que l'espace nécessaire entre la tête des boulons et la surface du boîtier électronique qui les porte peut être ramené à une dimension simplement légèrement supérieure à l'épaisseur de la collerette du boîtier d'antenne. Le serrage final des boulons peut alors être obtenu par une rotation de ceux-ci inférieure à un tour et un temps de main d'oeuvre considérable est donc économisé.

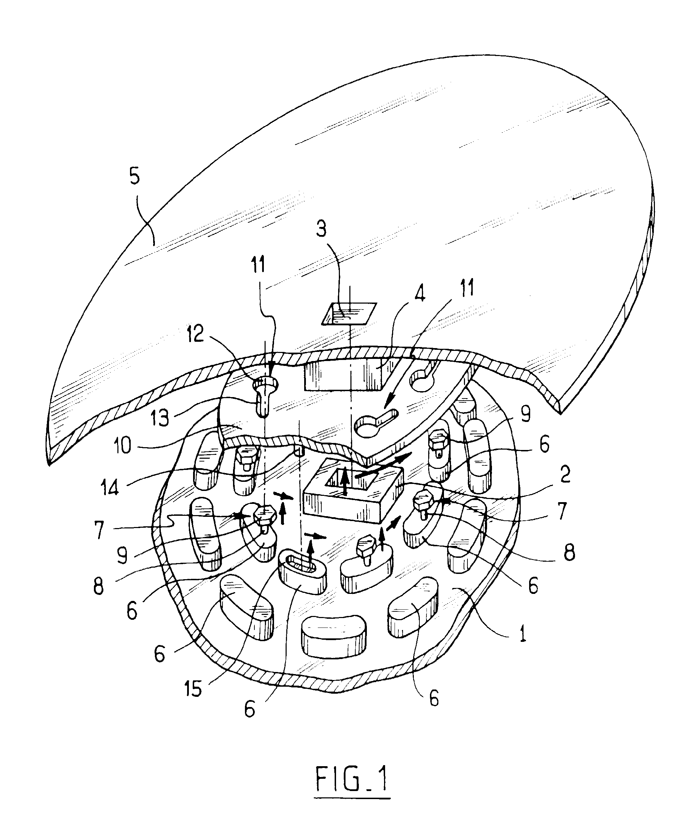

D'autres caractéristiques et avantages de l'invention apparaîtront à la lecture de la description qui suit d'un mode de réalisation particulier non limitatif de l'invention en référence à la figure unique ci-jointe qui est une vue en perspective éclatée partiellement écorchée d'une structure d'assemblage et de positionnement selon l'invention, dans une position juste avant l'engagement des têtes de boulons dans les ouvertures en trou de serrure.

En référence à la figure, l'assemblage selon l'invention est illustré en relation avec un relais hertzien comprenant de façon connue en soi un boîtier électronique dont seulement une partie de paroi 1 a été représentée sur la figure. La partie de paroi 1 comporte une partie de guide d'onde 2 qui, après assemblage, est destinée à coïncider exactement avec une partie de guide d'onde 4 solidaire d'une paroi en regard 5 du boîtier d'antenne.

Egalement de façon connue en soi la paroi 1 du boîtier électronique comporte des plots de refroidissement 6. Une série de plots de refroidissement 6 s'étendant en cercle autour de la partie de guide d'onde 2 sont équipés de boulons 7 dont la tige 8 est vissée dans la surface supérieure des plots de refroidissement 6 correspondants et dont la tête 9 s'étend en saillie par rapport à cette surface.

Par ailleurs, une collerette 10 est fixée à l'extrémité de la partie de guide d'onde 4 en regard de la paroi 1 et comporte des ouvertures en trou de serrure 11 ayant une première partie 12 circulaire de diamètre supérieur à la dimension des têtes de boulon 9 et une seconde partie oblongue 13 de largeur inférieure à la tête des boulons 7 et adaptée à recevoir la tige 8 des boulons 7. La collerette 10 porte également des ergots de positionnement 14 dont un seul est représenté sur la figure. Les ergots de positionnement s'étendent en saillie vers la partie de paroi 1 du boîtier électronique.

Selon l'invention, des plots de refroidissement 6 du boîtier électronique 1 comportent en outre des trous de positionnement borgnes 15 de forme oblongue en arc de cercle centrée sur l'axe de la partie de guide d'onde 2.

Les trous de positionnement 15 et les ergots 14 sont disposés de façon à permettre un engagement d'un ergot de positionnement 14 dans le trou correspondant lorsque la tête des boulons 7 est engagée dans la première partie 12 des ouvertures en trou de serrure 11 comme indiqué sur la figure par les flèches en trait épais selon une direction axiale de l'ergot de positionnement 14 et des tiges des boulons 7. En raison de l'engagement de l'ergot de positionnement dans le trou oblong 15, il est possible de mettre immédiatement la collerette 10 en appui sur la surface supérieure des plots 6. Pour que les têtes de boulon 9 dépassent à travers la collerette 10, il suffit alors que les têtes de boulon 8 soient initialement espacées de la surface supérieure des plots 6 d'une distance simplement légèrement supérieure à l'épaisseur de la collerette 10. La paroi 1 du boîtier électronique est ensuite pivotée autour de son axe comme indiqué sur la figure par les flèches en trait épais perpendiculaires aux flèches axiales. Le pivotement est effectué jusqu'à ce que l'ergot de positionnement 14 vienne en butée contre l'extrémité du trou oblong 15. A ce propos on notera que les parties oblongues 13 des ouvertures en trou de serrure 11 ont de préférence une longueur supérieure à la course de l'ergot de pivotement 14 dans le trou oblong 15 afin d'éviter que la tige 8 du boulon correspondant vienne en butée à l'extrémité de la partie oblongue 13 avant que l'ergot de positionnement 14 soit en contact avec l'extrémité du trou oblong 15. L'extrémité du trou oblong 15 sert alors de référence précise pour le positionnement des parties de guide d'onde l'une par rapport à l'autre.

Bien entendu, l'invention n'est pas limitée au mode de réalisation décrit et on peut y apporter des variantes de réalisation sans sortir du cadre de l'invention tel que défini par les revendications.

En particulier, bien que l'invention ait été illustrée en relation avec des ouvertures en trou de serrure et un trou de positionnement ayant une forme en arc de cercle, il est possible de les réaliser sous forme rectiligne, le pivotement du boîtier électronique par rapport au boîtier d'antenne étant alors remplacé par un coulissement en translation.

Bien que l'invention ait été illustrée en relation avec une structure dans laquelle l'ergot de positionnement 14 est porté par l'élément comportant les ouvertures en trou de serrure et le trou de positionnement 15 est réalisé dans l'élément portant les boulons 7, on peut prévoir de réaliser le trou de positionnement 15 sur l'élément comportant les ouvertures en trou de serrure 11 et de disposer l'ergot de positionnement 14 sur l'élément en regard.

Bien que l'invention ait été décrite en relation avec un relais hertzien, elle pourrait de plus s'appliquer à tout équipement comportant des boulons qui ne peuvent pas être serrés axialement et qui de ce fait comportent une structure d'assemblage et de positionnement du type boulon/ouverture en trou de serrure.

## Revendications

1. Structure d'assemblage et de positionnement du type boulon/ouverture en trou de serrure de deux éléments (1, 5) dont l'un comporte une série de boulons (7) s'étendant en saillie et l'autre comporte une série correspondante d'ouvertures en trou de serrure (11) ayant une première partie (12) de dimension suffisante pour permettre le passage d'une tête des boulons (7) et une seconde partie (13) oblongue de largeur inférieure à la tête des boulons (7) et adaptée à recevoir la tige (8) des boulons (7), l'un (5) des éléments comportant en outre au moins un ergot de positionnement (14) tandis que l'autre élément (1) comporte un trou de positionnement (15) correspondant, caractérisée en ce que le trou de positionnement (15) est oblong et est disposé de façon à permettre un engagement de l'ergot de positionnement (14) lorsque la tête (9) des boulons (7) est engagée dans la première partie correspondante (12) des ouvertures en trou de serrure (11), et en ce que la partie oblongue (13) des ouvertures en trou de serrure (11) a une longueur suffisante pour que lors d'un coulissement des tiges de boulon (8) dans les ouvertures en trou de serrure et de l'ergot de positionnement (14) dans le trou de positionnement (15), l'ergot de positionnement (14) vienne en butée sur une extrémité du trou de positionnement (15) alors que la tige (8) des boulons (7) est encore en retrait ou au plus en contact avec l'extrémité correspondante de la seconde partie (13) de l'ouverture en trou de serrure (15) dans laquelle elle s'étend.
